# EUROPEAN PATENT SPECIFICATION

(11) **EP 2 121 167 B1**
(45) Date of publication and mention of the grant of the patent: **03.05.2017**
(21) Application number: 07853421.1
(22) Date of filing: 19.12.2007
(51) Int. Cl.: B01D 53/56, F23G 5/24, F23G 5/50, F23L 1/02, F23L 9/02

(54) **TERTIARY AIR ADDITION TO SOLID WASTE-FIRED FURNACES FOR NOX CONTROL**
TERTIÄRLUFTZUSATZ ZU MIT FESTEN ABFÄLLEN BEFEUERTEN ÖFEN ZUR NOX-REDUKTION
ADJONCTION D'AIR TERTIAIRE DANS LES FOYERS D'INCINÉRATION D'ORDURES MÉNAGÈRES POUR LIMITER LES NOX

(30) Priority: 22.12.2006 US 876573 P; 24.04.2007 US 907956 P; 04.10.2007 US 905809
(43) Date of publication of application: 25.11.2009
(73) Proprietor: Covanta Energy, LLC, Wilmington, DE 19801 (US)
(72) Inventor: GOFF, Stephen P., Fairfield, New Jersey 07004 (US); WHITE, Mark L., Fairfield, New Jersey 07004 (US); DEDUCK, Stephen G., Fairfield, New Jersey 07004 (US); CLARK, John D., Fairfield, New Jersey 07004 (US); BRADLEY, Christopher A., Fairfield, New Jersey 07004 (US); BARKER, Robert L., Fairfield, New Jersey 07004 (US); SEMANYSHYN, Zenon, Fairfield, New Jersey 07004 (US)
(74) Representative: Müller Schupfner & Partner Patent- und Rechtsanwaltspartnerschaft mbB
(86) International application number: PCT/US2007/025835
(87) International publication number: WO 2008/082522

(56) References cited:
- EP-A2- 0 118 714
- EP-A2- 0 486 860
- EP-A2- 1 213 534
- WO-A1-99/58902
- WO-A1-03/038339
- WO-A1-2005/118113
- WO-A1-2006/084954
- US-A- 4 425 855
- US-A- 5 207 176
- US-A- 5 510 092
- US-A1- 2003 079 665
- US-B1- 6 336 415

## Description

### Field of the Invention

This invention is a process for reducing NOx emissions from a waste-to-energy boiler by the addition of tertiary air and a reduction of secondary air. Embodiments of this process can also be coupled with a secondary NOx reduction system, such as a simple selective non-catalytic reduction (SNCR) system using ammonia or urea, to achieve desirable high levels of NOx reductions.

### BACKGROUND OF THE INVENTION

WO9958902 discloses a waste furnace comprising a grate and primary / secondary air supply upstream and downstream thereof.

The combustion of solid waste in a Municipal Waste Combustor (MWC) generates some amount of NOx. NOx is the generic name for a group of colorless and odorless but highly reactive gases that contain varying amounts of NO and NO₂. The amount of NOx generated by the MWCs varies somewhat according to the grate and furnace design but typically ranges between 250 and 350 ppm (dry value at 7% O₂ in the flue gas).

The chemistry of NOx formation is directly tied to reactions between nitrogen and oxygen. To understand NOx formation in a MWC, a basic understanding of combustor design and operation is useful. Combustion air systems in MWCs typically include both primary (also called undergrate) air and secondary (also called overgrate or overfire) air. Primary air is supplied through plenums located under the firing grate and is forced through the grate to sequentially dry (evolve water), devolatilize (evolve volatile hydrocarbons), and burn out (oxidize nonvolatile hydrocarbons) the waste bed. The quantity of primary air is typically adjusted to minimize excess air during initial combustion of the waste while maximizing burnout of carbonaceous materials in the waste bed. Secondary air is injected through airports located above the grate and is used to provide turbulent mixing and destruction of hydrocarbons evolved from the waste bed. Overall excess air levels for a typical MWC are approximately 60 to 100% (160 - 200% of stoichiometric (i.e., theoretical) air requirements), with primary air typically accounting for 50-70% of the total air.

In addition to destruction of organics, one of the objectives of this combustion approach is to minimize NOx formation. NOx is formed during combustion through two primary mechanisms: Fuel NOx from oxidation of organically bound elemental nitrogen (N) present in the municipal solid waste (MSW) stream and Thermal NOx from high temperature oxidation of atmospheric N₂.

More specifically, fuel NOx is formed within the flame zone through reaction of organically bound N in MSW materials and O₂. Key variables determining the rate of fuel NOx formation are the availability of O₂ within the flame zone, the amount of fuel-bound N, and the chemical structure of the N-containing material. Fuel NOx reactions can occur at relatively low temperatures (<1,100°C (<2,000°F)). Depending on the availability of O₂ in the flame, the N-containing compounds will react to form either N₂ or NOx. When the availability of O₂ is low, N₂ is the predominant reaction product. If substantial O₂ is available, an increased fraction of the fuel-bound N is converted to NOx.

In contrast, thermal NOx is formed in high-temperature flame zones through reactions between N₂ and O₂ radicals. The key variables determining the rate of thermal NOx formation are temperature, the availability of O₂ and N₂, and residence time. Because of the high activation energy required, thermal NOx formation does not become significant until flame temperatures reach 1,100°C (2,000°F).

However, NOx emissions are generally undesirable and are of environmental significance because of their role as a criteria pollutant, acid gas, and ozone precursor. Direct health concerns of NOx center on the gases' effects on the respiratory system because NOx reacts with ammonia, moisture and other compounds to form nitric acid and related particles that may damage lung tissue. These and other particles produced from NOx penetrate deeply into sensitive parts of the lungs and can cause or worsen potentially fatal respiratory diseases such as emphysema and bronchitis.

In addition, the emissions of NOx pose other environmental concerns. For example, ground-level ozone is formed when NOx and volatile organic compounds (VOCs) react with heat and sunlight. Children, asthmatics, and people who work or exercise outside are susceptible to adverse effects from the ozone, and these effects include lung tissue damage and decreased lung function. Ozone also damages vegetation and reduces crop yields.

Furthermore, the reaction of NOx and sulfur dioxide with other substances in the air to form acids, which fall to earth with rain, fog, snow or dry particles as acid rain. Acid rain damages or deteriorates cars, buildings and monuments, as well as causes lakes and streams to become unsuitable for fish.

In addition, NOx are indirect greenhouse gases that affect the atmospheric amounts of hydroxyl (OH) radicals. Specifically, the breakdown of NOx gases gives rise to increased OH abundance.

Consequently, various laws and regulations have been passed to limit the emissions of NOx from MWCs and other sources. For example, the Unites States Environmental Agency is authorized in 40 C.F.R. Part 60 to monitor and limit NOx from MWCs. Similar rules and regulations to limit NOx emissions likewise exist internationally, such as in Europe, Canada, and Japan. It should be appreciated that a complete understanding and knowledge of various rules and laws on NOx emissions are outside the scope of the current discussion.

NOx control technologies can be divided into two subgroups: combustion controls and post-combustion controls. Combustion controls limit the formation of NOx during the combustion process by reducing the availability of O₂ within the flame and lowering combustion zone temperatures. These technologies include staged combustion, low excess air, and flue gas recirculation (FGR). Staged combustion and low excess air reduce the flow of undergrate air in order to reduce O₂ availability in the combustion zone, which promotes chemical reduction of some of the NOx formed during primary combustion. In FGR, a portion of the combustor exhaust is returned to the combustion air supply to both lower combustion zone O₂ and suppress flame temperatures by reducing the ratio of O₂ to inerts (N₂ and carbon dioxide (CO₂)) in the combustion air system.

Post-combustion controls relate to removing NOx emissions produced during the combustion process at solid waste fired boilers, and the most commonly used post-combustion NOx controls include selective non-catalytic reduction (SNCR) systems, which typically reduce the NOx significantly, or selective catalytic reduction (SCR) systems, which typically reduce the MOx even more effectively than SNCR systems. As described in greater detail below, SCR systems are many times more expensive to build, operate, and maintain than SNCR systems and are consequently not economically feasible for use on waste-to-energy (WTE) plants in many parts of the world.

SCR is an add-on control technology that catalytically promotes the reaction between NH₃ and NOx. SCR systems can use aqueous or anhydrous NH₃ reagent, with the primary differences being the size of the NH₃ vaporization system and the safety requirements. In the SCR system, a precise amount of a reagent is metered into the exhaust stream. The reagent decomposes into ammonia and reacts with NOx across a catalyst located downstream of the injection point. This reaction reduces NOx to elemental nitrogen and water vapor. SCR systems typically operate at temperature of approximately 260-371°C (500 - 700 °F). In terms of waste disposal fee impact and cost effectiveness, SCR generally has higher costs resulting from high capital costs, as well as the cost of catalyst replacement and disposal.

In contrast, SNCR reduces NOx to N₂ without the use of catalysts. Similar to the SCR system, the SNCR system injects one or more reducing agents into the upper furnace of the MWC to react with NOx and form N₂. Without the assistance of a catalyst, these reactions occur at temperatures of 871-982°C (1600-1800°F). Operation of SNCR processes near the upper end of their performance range may result in unwanted emissions of ammonia or other by-product gases. SNCR generally has significantly lower capital costs, as well as lower maintenance costs since there are no catalysts to replace and dispose.

WO 2006/084954 A1 relates to an air distribution system of a bubbling fluidized bed boiler.

EP 1213534 relates to a fluidized bed incinerator having a combustion furnace including first to fourth combustion sections.

### Summary of The Invention

This invention is a waste combustion system for reducing NOx emission, as defined in the appended claims.

### BRIEF DESCRIPTION OF THE DRAWINGS

A more complete understanding of the present invention and advantages thereof may be acquired by referring to the following description taken in conjunction with the accompanying drawings in which like reference numbers indicate like features, and wherein:
FIGS. 1-2 are schematic diagrams of a municipal waste combustion furnace with additional tertiary air in accordance with embodiments of the present invention; and
FIG. 3 is a flow chart depicting the steps in method for reducing NOx emissions from a municipal waste combustor through the use of a tertiary air source in accordance with embodiments of the present invention.

### DETAILED DESCRIPTION OF THE PREFERRED EMBODIMENTS

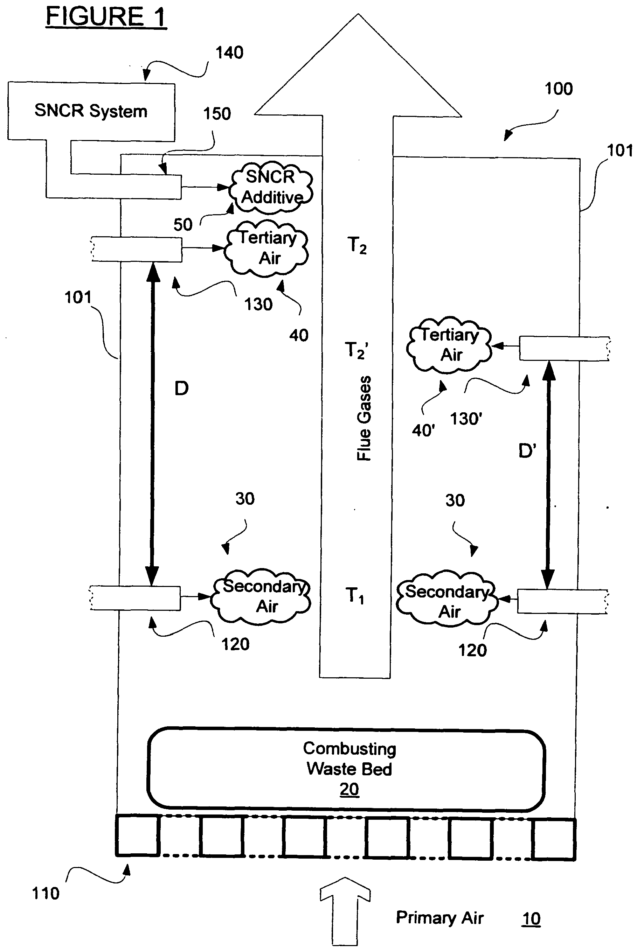

Referring now to FIG. 1, a solid waste combustion system 100 in one embodiment of the present invention employs a moving grate 110 with three major sources of combustion air. Primary air 10 is introduced below the grate 110 and flows up through a combusting waste bed 20. Secondary air 30 is introduced through one or more rows of secondary nozzles 120 above the combusting waste bed 20. In a typical MWC, the purpose of the secondary air 30 is to complete the combustion of volatile organics and carbon monoxide as soon as possible by adding additional oxygen and providing turbulence to intensely mix the combustion gases. In the present invention the secondary air plays a different role. It is injected at low velocities to minimize mixing and combustion. Its role is to help center the flames in the furnace and create a cooler air blanket along the walls to minimize the impact of the higher furnace temperatures on the materials used to protect the waterwalls of the furnace.

While the present discussion focuses on inclined and horizontal grate-based furnaces, it should be appreciated that the tertiary air NOx reduction principals of the present invention may likewise apply to any solid fuel fired boiler design.

It should be appreciated that the number and location of the secondary air nozzles 120 may vary with different furnace designs but are typically located just above the combusting waste in the lower furnace to accomplish the above-described purpose for the secondary air 30. Furthermore, it should be appreciated that the secondary air nozzles 120 may be adapted or otherwise modified according to known techniques to improve the performance of the furnace 100, for example, by modifying the shape, angle, and position of the secondary air nozzles 120. Although typically placed on the front and rear walls of the furnace, the secondary air nozzles may also be placed on the right and left walls at approximately the same elevation to further accomplish the above-described purpose. Likewise, although not depicted, the furnace 100 may be further modified through the addition and positioning of various shaping elements as needed to direct the flue exhaust flow to optimize the performance of the furnace 100.

Continuing with FIG. 1, the furnace 100 further includes tertiary air nozzles 130 to add a third combustion air stream, or tertiary air 40 to the solid waste combustion furnace. The tertiary air stream may be injected into the furnace 100 through the tertiary nozzles 130 located on the front, rear, left, or right walls of the furnace 100, in any number and combination that provides adequate mixing of the tertiary air with the combustion gases for the purpose of completing the combustion process and achieving low levels of carbon monoxide in the flue gas. It should be appreciated that the number and location of the tertiary air nozzles 130 may vary with different furnace designs but are typically located at an elevation significantly above the elevation of the secondary air nozzles 120. Furthermore, it should be appreciated that the tertiary air nozzles 130 may be adapted or otherwise modified according to known techniques to improve the performance of the furnace 100.

Referring back to FIG. 1, the tertiary air nozzles 130 supplying the third, or tertiary, air stream 40 are located a distance D away from the secondary air nozzles 120. The distance D is generally at least 10 feet, but optimally 7,6 to 15,2 m (25 to 50 feet) above the secondary air nozzles 120, and the rationale for the spacing is described in greater detail below. In particular, the tertiary nozzles 130 should be positioned sufficiently high to yield minimum NOx formation, but not higher than necessary such that the conditions would cause accelerated wastage to excessively large areas of the furnace wall materials. The precise location of the tertiary nozzles 130 at the distance D above the secondary air nozzles 120 will depend on numerous factors such as the specific configuration, size, and design of the furnace 100, along with the specific chemical nature of the combusting waste bed 20.

In particular, the secondary air 30 is typically introduced at a portion of the furnace 100 proximate to the combusting waste bed, and the temperature T1 in this location is relatively high, and is at or near the adiabatic temperature for the combustion of the waste fuel. Because the tertiary air 40 is introduced at a higher elevation, this portion of the furnace 100 is at a relatively lower temperature T2. For example, the temperature T1 would be above 1093°C (2000° F) and typically at approximately 1371°C (2500° F), and the temperature T2 may be between approximately 871° and 1037° (1600° and 1900° F) at the tertiary injection level (after the addition of the tertiary air) because of heat transfer to the furnace walls and mixing of the cooler tertiary air with the hot flue gas.

Reduction of the secondary air introduced at a higher temperature T1, and the addition of the tertiary air 40 at a lower temperature T2 results in lower NOx for two reasons. First, substoichiometric or nearly stoichiometric conditions exist between the secondary and tertiary nozzles, reducing the amount of excess oxygen available for reaction with nitrogen to form NOx. In addition, some portion of the NOx formed during primary combustion at the grate level will be chemically reduced within the region between the secondary and tertiary nozzles by NH2 and HCN radicals formed due to the lack of excess air. Second, exhaust combustion continues in the furnace 100 at the lower temperature T2, after the addition of the tertiary air, while the NOx production at this temperature is minimized. In test applications, a MWC configured to introduce secondary air 30 at a high temperature T1 and tertiary air 40 at lower temperature T2 yields lower NOx levels in the range of about 130 to 180 ppm, thereby achieving the same NOx levels as conventional solid waste fired furnaces with SNCR systems.

While the tertiary air 40 is typically injected at one elevation in the boiler 100 due to the cost of installing the nozzles 130 and duct work (not depicted), it would be possible to inject the tertiary air 40 in more than one elevation D, either to improve mixing with the flue gas, or to enable the elevation to be changed as the boiler fouls and the flue gas temperature profile through the boiler changes. Therefore, continuing with FIG. 1, one embodiment of the furnace 100 may further contain additional tertiary air nozzles 130' supplying an additional tertiary air stream 40' are located a second distance D' above from the secondary air nozzles 120. Because the additional tertiary air nozzles 130' is located at a different elevation D', the additional tertiary air stream 40' is introduced in a portion of the furnace 100 having a different temperature T2'.

Continuing with FIG. 1, the furnace 100 may achieve additional NOx reduction through the incorporation of an additional NOx reduction technology. For example, FIG. 1 depicts the incorporation of a known SNCR system 140 into the furnace 100. In particular, the SNCR system 140 typically injects a SNCR additive 50 such as ammonia or urea into the combustion gases in a temperature range of 871° to 982 °C (1600° to 1800° F)*.* Since, as described above, this temperature range is achieved in the middle to upper portion of the furnace 100 near the addition of the tertiary air stream 40, SNCR nozzles 150 may be positioned above the tertiary air nozzles 130 for optimal performance.

Furthermore, turbulence in the furnace created by the tertiary air 40 further aids in the mixing of the SNCR additive 50 with the combustion gases. This enhancement minimizes the number of SNCR nozzles 150 required, reduces the amount of carrier fluid needed with the SNCR additive 50, and reduces the amount of unreacted ammonia that exits the boiler, which is commonly called ammonia slip.

In experiments, this combination of tertiary air 40 with a SNCR system 140 yields NOx levels generally in the range of 30 to 70 ppm, thereby achieving NOx levels comparable to plants having much more expensive SCR systems.

while the embodiment of the furnace 100 depicted in FIG. 1 includes a SNCR system, it should be appreciated that still further NOx reductions may be achieved by incorporating a SCR system with a furnace 100 supplying tertiary air 40. In this situation where a non-SNCR NOx reduction system is employed, the tertiary air nozzles 130 can be adapted as needed to optimally apply the specific NOx reduction system. For example, as described above, the SCR systems use a catalyst that allows the NOx reducing reactions to occur at relatively lower temperatures in comparison to SNCR systems, approximately in the range of 260° - 371°C (500 - 700 °F). Accordingly, the tertiary air nozzles 130 may be moved to a greater distance D away from the secondary air nozzles so that the flue temperature T2 is less than the 871 - 982 °C (1600 - 1800 °F) range described above.

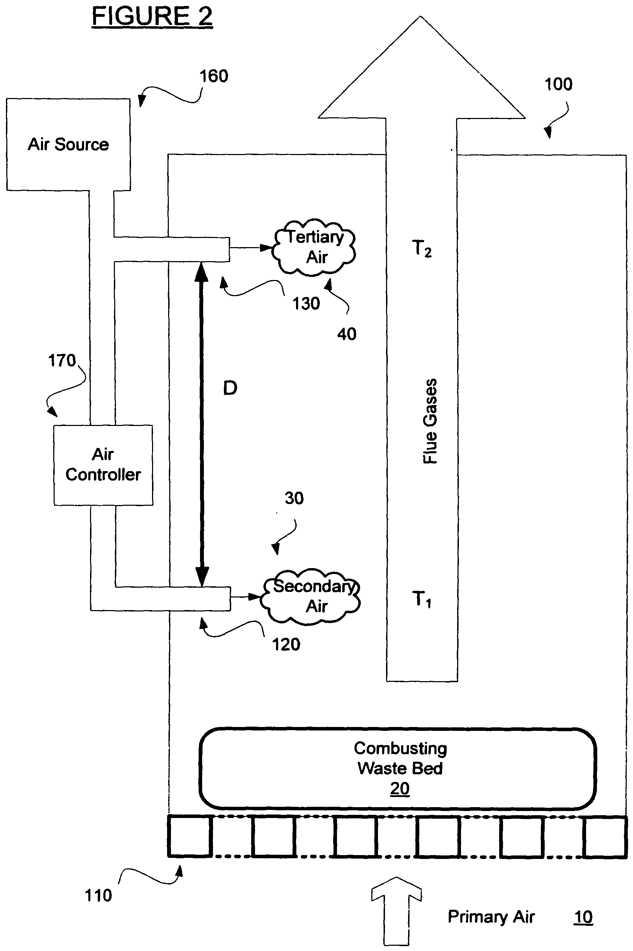

Referring now to FIG. 2, the furnace 100 in accordance of an embodiment of the present invention further comprises an air source 160 such as a motorized fan or other known air circulation system. In the depicted embodiment, a single air source 160 supplies both the secondary air 30 and the tertiary air 40. It should be appreciated however, that each of these inputs to the furnace 100 may be separately supplied and that this depicted configuration is merely for ease of illustration. It should also be appreciated that the primary air 10 is typically supplied to a MWC separately due to different pressure requirements, however, it would also be possible to provide all three air streams, primary 10, secondary 30 and tertiary 40 from a single source.

As described above, the total amount of air provided to a MWC, such as the furnace 100, is engineered to accomplish various combustion goals. Accordingly, the total amount of air provided to the furnace 100 through the primary air 10, secondary air 30, and tertiary air 40 does not necessarily change significantly from the total amount of primary air and secondary air supplied in known MWC systems. For similar reasons, the amount of primary air 10 provided in the furnace 100 does not generally change from the total amount of primary air supplied in known MWC systems. Thus, one preferred implementation of the present invention diverts a portion of the secondary air away from the secondary nozzle 120 and directs this portion as tertiary air 40 to the tertiary nozzle 130. Consequently, the amount of tertiary air 40 supplied to the furnace 100 has a corresponding reduction in the amount of secondary air 30. In one embodiment, 50 to 100% of the normal secondary air 30 is shifted to the tertiary nozzle 130 as tertiary air 40, and thereby the total air flow to the furnace 100 is similar to conventional designs.

It should be appreciated that different boiler designs utilize different primary and secondary air flows 10 and 30 and ratios of primary to secondary air 10 and 30. Therefore, the present invention could be applied to any boiler designs by shifting all, or a significant fraction of the secondary air 30 to the tertiary air nozzles 130. In addition, a fraction of the primary air 10 could also potentially be shifted to the tertiary air nozzles 130.

With the addition of tertiary air 40, the role changes for the reduced secondary air 30. As explained above, the secondary air 30 in known MWCs creates high turbulence with the flue gas, providing the mixing necessary to complete the combustion. With the addition of tertiary air 40, any remaining secondary air 30 does not generally provide good mixing. Instead, the secondary air 30 enters the furnace 100 at a much lower velocity and stays close to the walls 101 of the furnace 100, helping to protect the walls 101 from any increased temperatures and higher flames.

By then controlling the combined flow of the primary air 10, secondary air 30, and the tertiary air 40, the temperature of the combustion gases between the secondary air injection and the new tertiary air injection can be controlled to an optimal level. Continuing with FIG. 2, a controller 170 may adjust the allocation of air supplied as secondary air 30 and tertiary air 40. For example, the controller 170 may operate a damper that dynamically adjusts to open and close, according to the measured temperatures T1 and T2 in the furnace 100. Likewise, the air source 160 and/or a primary air source (not illustrated) can be adjusted as needed to achieve desired temperatures. The controller 170 may receive input measurements and adjust the allocation of the secondary air 30 and the tertiary air 40 as needed for desired system performance. For example, the controller 170 may be connected to a known Continuous Emissions Monitoring (CEM) system (not illustrated) that monitors the emissions within and from the furnace system. The controller 170, for example may adjust the allocation of the secondary air 30 and the tertiary air 40 as needed to minimize NOx emissions, for example to achieve desired temperature ranges for a SNCR or similar system, to achieve desired turbulence levels, to achieve desired Oxygen levels, etc.

Continuing with FIG. 2, it should likewise be appreciated that the primary, secondary, and tertiary airflows 10, 30, and 40 may be adjusted to achieve other performance measures. In particular, while the above discussion mentions adjusting the amount and allocation of the primary air 10, secondary air 30, and the tertiary air 40 to achieve desired thermal levels in specific regions of the furnace 100, similar techniques may be used to achieve other desired criteria. For example, the amount and allocation of the primary air 10, secondary air 30, and the tertiary air 40 may be adjusted so that the exhaust resides in the furnace 100 for a desired amount of time or is otherwise controlled to achieved desired performance such as boiler fouling or boiler efficiency. Additionally, the amount of tertiary air 40 may be controlled to achieve a desired level of turbulence and performance of the SNCR additive 150 (from FIG. 1) as previously described.

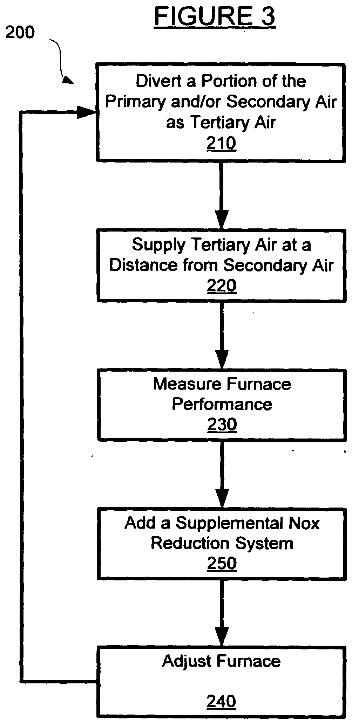

Referring now to FIG. 3, a NOx reduction method 200 for adapting a known MWC facility having a primary and secondary air source in accordance with an embodiment of the present invention is now discussed. In particular, the NOx reduction method 200 includes diverting a portion of the primary and/or secondary air as tertiary air, step 210. As described above, a damper may be used to redirect a portion of the secondary air. Alternatively, the mechanism supplying the secondary air may operate at a reduced level, and a second mechanism may be used to supply the tertiary air. While it is generally assumed that the overall amount of air supplied to the furnace will not increase, it should be appreciated that the air supply may be adapted as needed to achieve desired further performance. As described above, different boiler designs utilize different primary and secondary air flows and ratios of primary to secondary air. The idea could be applied to any of these boiler designs by shifting all, or a significant fraction of the secondary air to the new tertiary air nozzles. In addition, a fraction of the primary air could also potentially be shifted to the new tertiary air nozzles.

Continuing with the NOx reduction method 200 in FIG. 3, the tertiary air is introduced into the furnace at a distance away from the secondary air, step 220. As described above, the tertiary air is generally introduced at one or more higher elevations in a furnace region of relatively lower temperature. The temperature in this chosen furnace region should be sufficiently high to allow the combustion process to continue but sufficiently low to minimize NOx production.

Continuing with the NOx reduction method 200 in FIG. 3, the furnace is measured in step 230 to determine if desired performance measures are achieved. For example, the temperature in different regions of the furnace may be measured. As described above, different furnace performance measures, such as exhaust dwell time, NOx production levels, or the production levels of other pollutants, may also be used in evaluating the performance of the tertiary air. The evaluation in the furnace measurement step 230 may occur continuously or periodically, depending on desired performance and available resources.

Continuing with Step 230, while there is no direct measurement of stoichiometric conditions, by using ongoing measurements of air flows and excess 02 levels in the flue gas, the approximate stoichiometric air flow can be determined. Another way to look at it is that the furnace is very large and there are regions with excess air, and other regions with no excess air. When operating with the tertiary air, a much higher fraction of the furnace will have no excess air, so the furnace will have corresponding low 02 levels.

Referring back to the NOx reduction method 200 in FIG. 3, the results from the furnace measurement step 230 may be used to adjust the furnace in step 240, such as modifying the step of diverting the portion of the primary and/or secondary air as tertiary air in step 210. Otherwise, the MWC may be adjusted by modifying the amounts of primary air, secondary air, and tertiary air. The furnace adjustment in step 240 may similarly occur to react to changes in the municipal waste supplied to the MWC.

Returning to the NOx reduction method 200 in FIG. 3, supplement NOx reduction methods, such as SCR or SNCR, may also optionally be added to a MWC in step 250 to further reduce NOx emissions in coordination with the addition of the tertiary air. For example, data from MWCs using NOx reduction methods according to embodiments of the present invention is shown below.

Table 1 provides sample data from a MWC using a NOx reduction method according to an embodiment of the present invention for various timed periods. For the results shown in Table 1, supplemental NOx reduction methods, such as SCR or SNCR, were not used. As shown in Table 1, NOx values were measured to vary from 100 ppm to 190 ppm as the ratio of secondary air to tertiary air is varied from about 0.4 to 1.5. These values are measurably lower than typical amounts of NOx generated by MWCs (typically between 250 and 350 ppm).

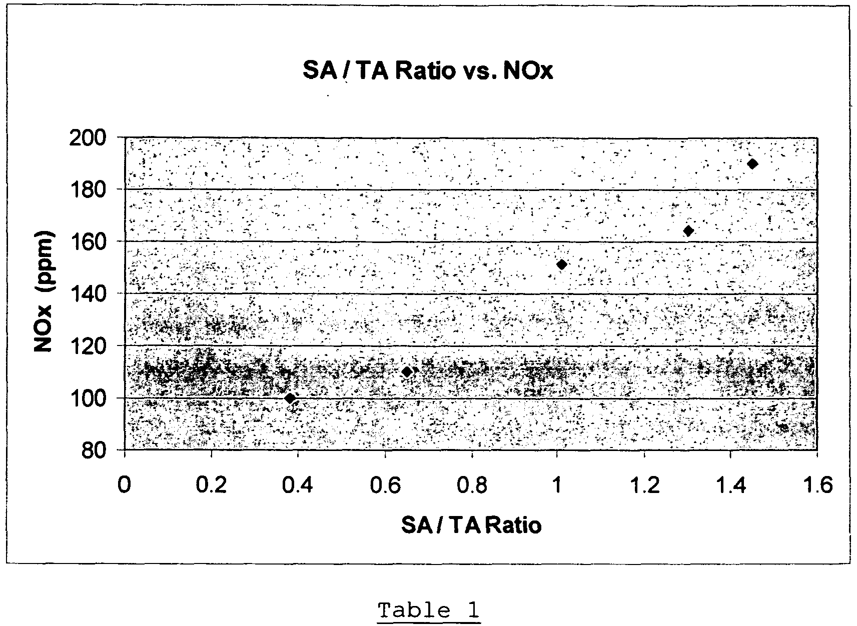

Table 2 provides sample data from a MWC using a NOx reduction method with supplemental SNCR according to another embodiment of the present invention for various timed periods. As shown in the "NOx" column of Table 2, NOx values were measured between 50 and 62 ppm, NOx values were measurably lower than NOx amounts generated by MWCs using NOx reduction techniques according to an embodiment of the present invention without supplement NOx reduction methods (shown in Figure 1). In fact, the measured values compare favorably with more expensive SCR techniques.

**Table 2**

| **Case** | **Days** | **Steam** | **Aq. NH3** | **NOx** | **NH₃ Slip** |
|---|---|---|---|---|---|
| | | **Klb/hr** | **gph** | **ppm** | **ppm** |
| **1** | **4** | **78** | **9.3** | **62** | **1.2** |
| **2** | **10** | **78** | **12.6** | **62** | **2.4** |
| **3** | **14** | **76** | **13.0** | **59** | **4.8** |
| **4** | **3** | **75** | **12.5** | **50** | **2.5** |

## Claims

1. A waste combustion furnace system for reducing NOx emission, the system comprising:
a) a furnace (100), said furnace (100) comprising a grate (110) supporting a combusting waste bed (20);
b) a primary air source introducing primary air (10) upstream from the grate (110);
c) at least one secondary nozzle (120) introducing secondary air (30) downstream from the combusting waste bed (20);
**characterised by**
d) at least one tertiary nozzle (130) introducing tertiary air (40), the at least one tertiary nozzle (130) located at a distance downstream from said at least one secondary nozzle (120),
e) a continuous emissions monitoring system configured to monitor emissions within and from the furnace (100);
f) a controller (170) connected to the continuous emissions monitoring system and to adjust the allocation of the secondary air (30) and the tertiary air;
g) a selective non-catalytic reduction (SNCR) system (140), positioned downstream from the at least one tertiary air nozzle (130).

2. The system of claim 1, wherein the controller (170) is further configured to adjust the allocation of the primary air (10) to the primary air source.

## Patentansprüche

1. Abfallverbrennungsofensystem zur Reduzierung der NOx-Emission, wobei das System enthält:
a) einen Ofen (100), wobei der Ofen (100) einen Rost (110) enthält, der eine verbrennende Abfallschicht (20) trägt;
b) eine Primärluftquelle, die Primärluft (10) stromaufwärts vor dem Rost (110) einführt;
c) mindestens eine Sekundärdüse (120), die Sekundärluft (30) stromabwärts hinter der verbrennenden Abfallschicht (20) einführt;
**gekennzeichnet durch**
d) mindestens eine Tertiärdüse (130), die Tertiärluft (40) einführt, wobei die mindestens eine Tertiärdüse (130) in Abstand stromabwärts hinter der mindestens einen Sekundärdüse (120) angeordnet ist,
e) ein kontinuierliches Emissionsüberwachungssystem, das konfiguriert ist, Emissionen innerhalb des und vom Ofen (100) zu überwachen;
f) eine Steuereinheit (170), die mit dem kontinuierlichen Emissionsüberwachungssystem verbunden ist und die Zuteilung der Sekundärluft (30) und der Tertiärluft einstellt;
g) ein System (140) zur selektiven nicht-katalytischen Reduktion (SNCR), das stromabwärts hinter der mindestens einen Tertiärluftdüse (130) angeordnet ist.

2. System nach Anspruch 1, wobei die Steuereinheit (170) weiter konfiguriert ist, die Zuteilung der Primärluft (10) zur Primärluftquelle einzustellen.

## Revendications

1. Système formant four de combustion de déchets destiné à réduire les émissions de NOx, le système comprenant :
a) un four (100), ledit four (100) comprenant une grille (110) qui supporte un lit de déchets en combustion (20) ;
b) une source d'air primaire introduisant de l'air primaire (10) en amont de la grille (110) ;
c) au moins une buse secondaire (120) introduisant de l'air secondaire (30) en aval du lit de déchets en combustion (20) ;
**caractérisé par**
d) au moins une buse tertiaire (130) introduisant de l'air tertiaire (40), ladite au moins une buse tertiaire (130) étant située à une distance en aval de ladite au moins une buse secondaire (120),
e) un système continu de surveillance d'émissions configuré pour surveiller les émissions dans le four et depuis celui-ci (100) ;
f) un contrôleur (170) connecté au système continu de surveillance d'émissions et pour ajuster l'attribution d'air secondaire (30) et d'air tertiaire ;
g) un système (140) à réduction sélective non catalytique (SNCR), positionné en aval de ladite au moins une buse d'air tertiaire (130).

2. Système selon la revendication 1, dans lequel le contrôleur (170) est en outre configuré pour ajuster l'attribution d'air primaire (10) à la source d'air primaire.
